# EUROPÄISCHE PATENTSCHRIFT

(11) **EP 1 386 721 B1**
(45) Veröffentlichungstag und Bekanntmachung des Hinweises auf die Patenterteilung: **22.12.2010**
(21) Anmeldenummer: 03013427.4
(22) Anmeldetag: 21.06.2003
(51) Int. Cl.: B29C 70/50, B29C 70/54

(54) **Verfahren und Anlage zur Herstellung von faserverstärkten Formteilen**
Method and installation for producing fiber reinforced moulded parts
Procédé et dispositif de fabrication de pièces moulées renforcées de fibres

(30) Priorität: 22.07.2002 DE 10233300
(43) Veröffentlichungstag der Anmeldung: 04.02.2004
(73) Patentinhaber: Dieffenbacher GmbH + Co. KG, 75031 Eppingen (DE)
(72) Erfinder: Brüssel, Richard, 75056 Sulzfeld (DE)
(74) Vertreter: Hartdegen, Anton

(56) Entgegenhaltungen:
- DE-A- 19 949 318
- DE-C- 4 011 104
- US-A- 4 238 176
- US-A- 4 894 292
- US-A- 5 202 071
- PATENT ABSTRACTS OF JAPAN vol. 014, no. 157 (M-0955), 27. März 1990 (1990-03-27) & JP 02 018008 A (SHOWA HIGHPOLYMER CO LTD), 22. Januar 1990 (1990-01-22)

## Beschreibung

Die Erfindung betrifft ein Verfahren zur Herstellung von faserverstärkten Formteilen (SMC), bei dem nach dem Oberbegriff des Anspruchs 1 der Herstellungsablauf in einer Harzmattenanlage von der Mischung der Einzelkomponenten für den Harzansatz bis zum Pressvorgang eines Formteils in kontinuierlicher Arbeitsweise erfolgt und sie betrifft weiter eine Anlage nach dem Oberbegriff des Anspruchs 3 zur Durchführung des Verfahrens,

Wegen ihren guten mechanischen Eigenschaften und des günstigen Preises sind solche nach dem SMC-Verfahren hergestellten Formteile die am meisten eingesetzten duroplastischen Faserverbundkunststoffe.
Bisher wird zur Herstellung von SMC-Teilen zuerst der Rohstoff, bestehend aus einer Harzmasse (Harzansatz) mit eingelagerten geschnittenen Glasfasern, hergestellt. Dieser Harzansatz wird auf dünnen durchsichtigen Kunststofffolien (Trägerfolien) abgelegt und einem Reifeprozess unterzogen. Der derzeitige Reifeprozess liegt bei 4-5 Tagen und dient dem Eindicken der im Harzansatz eingemischten Füllstoffe. Der Harzansatz besteht aus Harzen, Thermoplastlösungen, Füllstoffen, Fließverbesserer, integrierte Trennmittel, Inhibitoren und Härter. Dieser wird zu einer gut dispergierten Flüssigkeit auf vorgegebene Temperatur gerührt und an der Harzmattenanlage noch mit einem Eindickmittel, pulverförmig oder flüssig, versehen und über Rakel auf die untere und obere Trägerfolie aufgerakelt und in der Breite eingestellt. Auf die Harzansatzschicht der unteren Trägerfolie wird das Schnittglas zum Beispiel von Endlos-Rovings mit Schneidewerken aufdosiert. Danach legt sich die obere Trägerfolie mit dem Harzansatz auf den Schnittfaserbelag. Durch einen anschließenden Walkprozess werden die Fasern mit dem Harzansatz vermischt/getränkt und als Harzmatte anschließend auf eine Rolle gewickelt oder als flächiges Halbzeug für den Reifeprozess zwischengelagert. Durch den Reifeprozess dickt der Harzansatz so stark ein, dass die Trägerfolien rückstandsfrei abgezogen werden können und beim Fließpressen die Glaspressung entsprechend mit der Matrix fliessen.
Aus dem flächigen Halbzeug oder den Rollen werden, abgestimmt auf das jeweils herzustellende Formteil, Zuschnittmatten herausgeschnitten und in einer Formpresse einfach oder als Paket abgelegt und verpresst.
Der Nachteil dieses Verfahrens ist, dass das SMC-Halbzeug erst nach einer langen Reifezeit verarbeitet werden kann, wodurch sich die Herstellungskosten erhöhen.

Mit US 5,202,071 A ist ein Verfahren zur Herstellung von SMC bekannt geworden, dass neben einer kontinuierlichen Herstellung eines Harzansatzes mittels eines Extruders vorsieht das Extrudat auf eine Langfasermatte aufzugeben. Dieses Compound wird dann in einer Walzstrecke verdichtet und gekühlt, wobei außen Folien angeordnet sind. Nach der Walz- und Kühlstrecke kann das SMC geschnitten und in einer Presse verpresst werden. Neben dem Nachteil, dass umständlich Folien zugeführt werden, die vor der Verpressung mit Hand wieder abgenommen werden müssen, können hier nur Harzansätze verwendet werden, die nach der Extrusion sofort verwendbar sind.

DE 199 49 318 A1 zeigt eine Anlage zum herstellen von SMC gemäß dem Oberbegriff des Anspruchs 3 wobei auf Folien Harze mit einer Rakel aufgebracht werden und zwischen diese Harze Verstärkungsfasern eingelegt werden, wobei nach einer Zusammenführung dieser Folien mit innen liegendem Harz zu einer Art Sandwich, dieses geschnitten und auf Rollen aufgewickelt wird. Später müssen dann die Folien von den SMC-Schichten wieder entfernt werden.

Von Nachteil ist weiter, dass das auf eine Rolle aufgewickelte Halbzeug während des Reifeprozesses sich verformt. Liegt die Rolle auf dem Boden, gibt es Pressungen auf die unten liegenden SMC-Bahnen und damit ein ' Verdrängen des Materials zur Seite. Werden die Rollen über eine Achse aufgehängt, ist der negative Effekt während der Reifelagerung umgekehrt. Das Material fließt nach unten und die Bahnschichten im unteren Bereich der Rolle werden höhere Flächengewichte aufweisen, als die oberen Bahnschichten. Diese zwangsläufig unterschiedlichen Flächengewichte zwingen dazu, die Matten je Form nicht nur der Länge nach abzuschneiden sondern zusätzlich zu wiegen, um je Fertigungsteil die gleiche Füllung und damit Teiledicke zu erhalten. Wären die Flächengewichte der Bahnen konstant, könnten die benötigten SMC-Bahnabschnitte mit einer Längenmessuhr automatisch geschnitten werden, was die Herstellungskosten erheblich erniedrigen und die Qualität der Formteile verbessern würde. Diese im Dickenquerschnitt unterschiedliche Zuschnittmatten-Zusammensetzung ist auch der Grund, warum die Herstellung von SMC-Formteilen bisher unzureichend automatisierbar war.
Als weiterer Nachteil der bisherigen SMC-Herstellung sind die nicht wiederverwendbaren Trägerfolien zu sehen, die als Kostenfaktor in den Herstellungsprozess eingehen.

Der Erfindung liegt die Aufgabe zugrunde, ein Verfahren anzugeben, mit dem es möglich ist, die Harzmatten (SMC-Halbzeug) mit der geeigneten Plastizität für eine unmittelbar folgende Direktverarbeitung zu Förmteilen bereitzustellen und eine Anlage zur Durchführung eines solchen Verfahrens zu schaffen.

Die Lösung für das Verfahren besteht nach Anspruch 1 darin, dass der Harzansatz bis zum Pressvorgang eines Formteils in kontinuierlicher Arbeitsweise durch folgende Verfahrensschritte erfolgt. In einem ersten Schritt wird dem durch intensive Vermischung der genau dosierten Anteilkomponenten hergestellten Harzansatz zuletzt ein schnellreagierendes Eindickmittel zugemischt, der Harzansatz wird anschließend je nach Vorgabe anteilig auf ein unteres Band und ein oberes Band mittels Rakel zu Harzansatzschichten mit entsprechender Dicke aufgerakelt. Weiter wird auf die untere Harzansatzschicht Schnittglas, zum Beispiel aus Endlos-Rovings mit Schneidwerken, und/oder Langfasern aufdosiert und nach Zusammenführung der beiden Harzansatzschichten in einer als Walk- und Tränkstrecke ausgeführten Harzmattenanlage zu einer endlosen Harzmatte geformt. Diese endlose Harzmatte wird dann für einen zeitlich vorgegebenen Reifeprozess mäanderförmig mit den Bändern durch einen temperierten Eindick-Durchlaufspeicher geführt, wobei der Reifeprozess von der Durchlaufzeit und der Wärme im gekapselten Eindick-Durchlaufspeicher bestimmt wird und nach Aufteilung in vorbestimmte Zuschnittmatten werden sie der Weiterverarbeitung, zum Beispiel einer beheizten Formpresse zugeführt und zu Formteilen verpresst.

Mit den Maßnahmen des erfindungsgemäßen Verfahren ist möglich faserverstärkte Formteile ohne Zwischenlagerung für den Reifeprozess im kontinuierlichen Direktverfahren herzustellen.

Für den erfolgreichen Prozessablauf sind jedoch alle Verfahrensschritte konsequent durchzuführen. Dies gilt sowohl für die bekannten als auch für die neuen Verfahrensschritte mit folgenden Auswirkungen:
Die Rezepturen für die Mischung des Harzansatzes müssen genau eingehalten werden, denn:
   - der Harzansatz muss intensiv gemischt und ein geeignetes schnellreagierendes Eindickmittel in ausreichender Dosierung zugemischt werden und
   - eine kurze Reifezeit und ein gezielter Wärmeeintrag für die endlose Harzmatte im Eindick-Durchlaufspeicher muss abgestimmt auf die verwendeten Einzelkomponenten und ihrer prozentualen Anteile im Harzansatz vorausbestimmt und messtechnisch kontrolliert eingehalten werden.

Der gezielte Wärmeeintrag in die Harzmatte bewirkt zum einen eine zeitlich begrenzte Viskositätsabnahme, die das schnelle Quellen der Füllstoffe ermöglicht und andererseits die Vorvernetzung des Kunststoffes einleitet.

Durch die Verwendung mehrerer Bandträger und ihre wählbare Länge im Eindick-Durchlaufspeicher, kann der Reifeprozess zeitlich bestimmt und/oder durch Variieren der Produktionsgeschwindigkeit reguliert werden.

Die Anlage zur Durchführung des Verfahrens besteht nach Anspruch 3 aus Mischstationen für die Harzansatzkomponenten,
- zweier, den Harzansatz auf ein unteres und oberes Band aufstreichende Rakel,
- einer Vorrichtung zum Aufbringen von Schnittglas auf die untere Harzansatzschicht,
- einer Walk- und Tränkstrecke zum Formen einer endlosen Harzmatte,
- einen Eindick-Durchlaufspeicher für den Reifeprozess der mäanderförmig über temperierbare Bandträger durchlaufenden Harzmatte,
- einen Schneidwerk zum formgerechten ablängen von Zuschnittmatten beim Austreten der Harzmatte aus dem Eindick-Durchlaufspeicher und
- einer Formpresse, in der die Zuschnittmatten einfach oder als Paket abgelegt und zum Formteil verpressbar sind

Diese Anlage bietet den Vorteil, das Verfahren gezielt, genau und kontrolliert in einer kontinuierlichen Produktion zu verwirklichen und erfolgreich durchzuführen. Mit dem erfindungsgemäßen Eindick-Durchlaufsspeicher ist es insbesondere gelungen, den zeitlich vorgegebenen Reifeprozess, je nach der erforderlichen Länge der temperierbaren Bandträgern, mäanderförmig vertikal anzuordnen und in einem kompakten Gehäuse unterzubringen.

Durch die Anordnung der Bandträger und ihrer Ausführung in Länge und Anzahl übereinander kann der Reifeprozess mit entsprechender Reifezeit ausgelegt werden. Als Kostenvorteil und Vereinfachung der Anlage ist auch anzusehen, dass keine Wegwerffolien für die Formung und den Transport der Endlos-Harzmatte Verwendung finden obwohl dies auch möglich wäre, sondern Endlos-Bänder für den Dauergebrauch vorgesehen sind.

Nachstehend sind Vorteile des Verfahrens und der Anlage aufgeführt:
- Steigerung der Prozess-Fähigkeit für bessere Formteilqualität.
- Steigerung der Prozesseffizienz durch Vermeidung der Halbzeugprodukte und damit Verringerung der Formteilkosten.
- Keine unterschiedlich temperierte Halbzeuglagerung, keine Materialschwankungen aufgrund von unterschiedlich gelagerten Materialien - z.B. Sommer-/Winterware. Zwischen-Lagerkapazitäten müssen nicht vorhanden sein. Mehrere Rezepte in der SMC-Verarbeitung möglich.
- Durch den kontinuierlichen Prozess ist die Homogenität der Harzmatten sehr stark ausgeprägt. Dies führt zu sehr gleichmäßigen Formteilen mit deutlich reduzierter Nacharbeit.
- Die Reproduzierbarkeit ist durch die geringe Materialmenge im Prozess gewährleistet.
- Die beim Halbzeugtransport entstehenden Schwierigkeiten mit Temperaturwechseleinwirkungen, Lagerungsdauer, Feuchtigkeit werden vermieden.
- Steigerung der Oberflächenqualität durch reproduzierbares Fliessverhalten.
- Speisung mehrere Pressstationen durch entsprechend ausgelegte Harzmatteneinheiten möglich.
- Die kontinuierliche, direkte Bereitstellung des faserverstärkten duroplastischen Materialgemisches verhindert die Schwankungen in der Materialqualität bei der Verarbeitung.

Als Vorteil und Ergebnis aller Verfahrensschritte und Merkmale der Anlage gemäß der Erfindung können die Zuschnittmatten mit der richtigen Plastizität in einem SMC-Direktverfahren der Weiterverarbeitung zu faserverstärkten duroplastischen Formteilen zugeführt werden, das heißt, das erfindungsgemäße SMC-Direktverfahren ist in der Lage höchst reproduzierbare langfaserverstärkte duroplastische Materialien dem Verarbeiter zur Verfügung zu stellen.

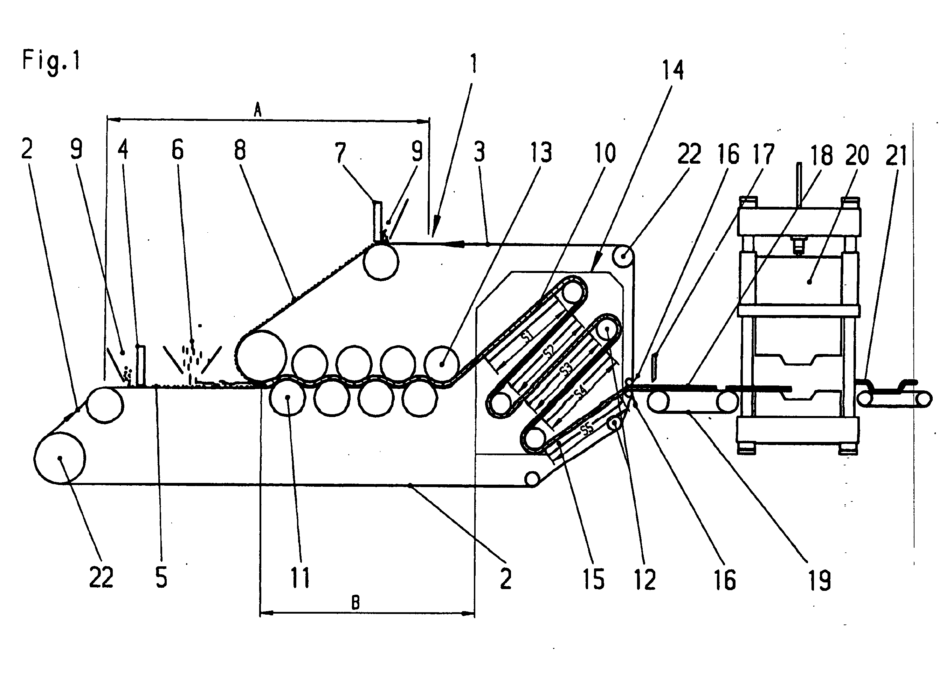

Weitere vorteilhafte Maßnahmen und Ausgestaltungen des Gegenstandes der Erfindung gehen aus den Unteransprüchen und der folgenden Beschreibung mit der Zeichnung hervor.

Die Zeichnung zeigt die erfindungsgemäße Harzmattenanlage 1 zur Durchführung des Verfahrens in einer Seitenansicht. Sie besteht in ihren markanten Teilen aus der Harzansatzaufbringstrecke A, der Walk- und Tränkstrecke B und dem Eindick-Durchlaufspeicher 14. Die Mischstation für die Mischung der Einzelkomponenten für den Harzansatz 9 sind nicht dargestellt, da sie bekannter Stand der Technik sind. Die Harzmattenanlage 1 zeigt insbesondere, dass in der Walk- und Tränkstrecke B sowie im Eindick-Durchlaufspeicher 14 nicht Einmalfolien Verwendung finden, sondem wiederverwendbare, endlose Bänder 2 und 3, die die Harzmatte 10 über Umlenkrollen 22 durch die Anlage führen. Der vorgemischte Harzansatz 9 wird zuerst mit dem Rakel 4 auf das untere Band 2 zur Harzansatzschicht 5 aufgerakelt. Auf diese untere Harzansatzschicht 5 werden dann Schnittglas 6 oder Langfasern aufdosiert. Es können auch, insbesondere für tragende Teile, Endlosfasern oder Fasermatten eingelegt werden. Gleichzeitig erfolgt das Aufrakeln der Harzansatzschicht 8 mittels dem Rakel 7 auf das obere Band 3. Nach dem Zusammenführen der beiden Harzansatzschichten 5 und 8 und ihr Einführen zwischen die unteren und oberen Walzen 11 und 13 wird die Harzmatte 10 in der Walk- und Tränkstrecke B geformt, wobei die Glasfasern, oder andere Fasern, mit dem Kunststoff im Harzansatz 9 durchtränkt und zusammengewalkt werden. Die so geformte endlose Harzmatte 10 wird dann mittels Antriebsrollen 12, dabei stets an den Bändern 2 und 3 anliegend, zum Reifen durch einen temperierten und abgekapselten Eindick-Durchlaufspeicher 14 geführt. Darin sind die Bänder 2 und 3 mit der Harzmatte 10 ebenfalls durch Antriebsrollen 12 angetrieben und um die Bandträger 15 geführt. Die Bandträger 15 sind je nach vorgegebener Reifezeit in ihrer Anzahl, in ihrer Länge S sowie in der ihnen zuführenden Wärmemenge verschieden auszuführen. Die Länge der Gesamtreifestrecke S addiert sich dann zum Beispiel durch die Länge der Einzelstrecken s₁ bis s₅ der verwendeten Bandträger 15. Durch die mäanderförmig übereinander angeordneten Bandträger 15 ist die Harzmattenanlage 1 kurz und kompakt zu. Von Vorteil ist dabei auch, dass der Eindick-Durchlaufspeicher 14 in seinen Ausmaßen für die notwendigen Parameter gut berechenbar ist.

Ist die Harzmatte 10 gereift wird sie von den Messerleisten von den Bändern 2 und 3 abgelöst und dem Schneidwerk 17 zugeführt. Im Schneidwerk 17 wird die Harzmatte 10 je nach Vorgabe in der Länge, oder auch in der Breite, abgeschnitten, über das Zuführband 19 als Zuschnittmatte 18 der Formpresse 20 zugeführt und zum Formteil 21 verpresst und ausgehärtet.

### Bezugszeichenliste: DP 1285 EP

- 1.: Harzmattenanlage
- 2.: Band unten
- 3.: Band oben
- 4.: Unteres Rakel
- 5.: Harzansatzschicht
- 6.: Schnittglas aus Rovings und/oder Langfasern
- 7.: Oberes Rakel
- 8.: Harzansatzschicht
- 9.: Harzansatz
- 10.: Harzmatte
- 11.: Walzen, unten
- 12.: Antriebsrollen
- 13.: Walzen, oben
- 14.: Eindick-Durchlaufspeicher
- 15.: Bandträger
- 16.: Messerleiste
- 17.: Schneidwerk
- 18.: Zuschnittmatte
- 19.: Zuführband
- 20.: Formpresse
- 21.: Formteil
- 22.: Umlenkrolle
- 23.: Antriebsrollen

- S: Länge eines Bandträgers 15
- A: Harzansatzaufbringstrecke
- B: Walk- und Tränkstrecke

## Patentansprüche

1. Verfahren zur Herstellung von faserverstärkten Formleilen, SMC, bei dem der Herstellungsablauf in einer Harzmattenanlage (1) von der Mischung der Einzelkomponenten für den Harzansatz (9) bis zum Pressvorgang eines Formteils in kontinuierlicher Arbeitsweise durchgeführt wird,
wobei der durch intensive Vermischung der genau dosierten Anteilkomponenten hergestellte Harzansatz (9) je nach Vorgabe anteilig auf ein unteres Band (2) und ein oberes Band (3) mittels Rakeln (4; 7) zu Harzansatzschichten (5; 8) mit entsprechender Dicke aufgerakelt werden,
wobei auf die untere Harzansatzschicht (5) Schnittglas (6) und/oder Langfasern aufdosiert und nach Zusammenführung der beiden Harzansatzschichten (5; 8) in einer als Walk- und Tränkstrecke (B) ausgeführten Harzmattenanlage (1) zu einer endlosen Harzmatte (10) geformt werden, wobei diese nach Aufteilung in vorbestimmte Zuschnittmatten (18) der Weiterverarbeitung in einer beheizten Formpresse (20) zugeführt und zu Formteilen (21) verpresst werden, wobei
die endlose Harzmatte (10) für einen zeitlich vorgegebenen Reifeprozess mäanderförmig mit den Bändern (2; 3) durch einen temperierten Eindick-Durchlaufspeicher (14) geführt wird, und
wobei der Reifeprozess von der Durchlaufzeit und der Wärme im gekapselten Eindick-Durchlaufspeicher (14) und von dem schnell reagierende Eindickmittel bestimmt wird, das dem Harzansatz (9) vor der Aufgabe auf die unteren oder oberen Bänder (2; 3) zugemischt wird.

2. Verfahren nach Anspruch 1, **dadurch gekennzeichnet, dass** die zeitliche Reifeprozess-Vorgabe durch die wählbare Länge der Bandträger (15) im Eindick-Durchlaufspeicher (14) und der Produktionsgeschwindigkeit erfolgt.

3. Anlage zur Durchführung des Verfahrens nach Anspruch 1 und 2 in einer Harzmattenanlage (1) bestehend aus Mischstationen für die Harzansatzkomponenten zur Herstellung eines Harzansatzes (9),
zwei den Harzansatz (9) auf ein unteres und oberes Band (2 und 3) aufstreichende Rakel (4 und 7),
einer Vorrichtung zum Aufbringen von Schnittglas (6) auf die untere Harzansatzschicht (5),
einer Walk- und Tränkstrecke (B) zum Formen einer endlosen Harzmatte (10), einem Schneidwerk (17) zur formgerechten Aufteilung der endlosen Harzmatte (10) zu Zuschnittmatten (18), und
einer Formpresse, in der die Zuschnittmatten (18) einfach oder als Paket abgelegt und zu einem Formteil (21) verpressbar sind,
**dadurch gekennzeichnet, dass**
nach der Walk- und Tränkstrecke (B) zum Formen einer endlosen Harzmatte (10) ein Eindick-Durchlaufspeicher (14) für den Reiteprozess vorgesehen ist, der mäanderförmig angeordnete und temperierbare Bandträger (15) für die endlose Harzmatte (10) aufweist und
das Schneidwerk (17) zur Aufteilung der Harzmatte (10) beim Austreten der Harzmatte (10) aus dem Eindick-Durchlaufspeicher (14) angeordnet ist.

4. Anlage nach Anspruch 3, **dadurch gekennzeichnet, dass** die Bänder (2 und 3) endlos und ausreichend stark für einen Dauerbetrieb ausgeführt sind.

5. Anlage nach den Ansprüchen 3 und 4, **dadurch gekennzeichnet, dass** sich die Länge der Reifungsstrecke durch übereinander angeordnete mehrere Teilstrecken (S₁ + S₂ + S₃..._{Sn}) der Bandträger (15) zusammensetzt.

## Claims

1. A method for producing fibre-reinforced moulded parts, SMC, in which the production process is performed in a resin mat installation (1) from the mixing of the individual components for the resin batch (9) up to the pressing process of a moulded part in continuous operation, with the resin batch (9) which is produced by intensive mixing of precisely dosed constituent components being knife-coated proportionally as required to a bottom belt (2) and an upper belt (3) by means of doctor blades (4; 7) into resin batch layers (5; 8) with respective thickness, with cut glass (6) and/or long fibres being dosed onto the bottom resin batch layer (5) and, after joining of the two resin batch layers (5; 8), are formed into an endless resin mat (10) In a resin mat installation (1) arranged as a milling and impregnating section (B), with the same being supplied to further processing in a heated moulding press (20) after division into predetermined cut mats (18) and being pressed into moulded parts (21), with the endless resin mat (10) being guided for a temporally predetermined ripening process in a meandering manner with the belts (2; 3) through a tempered continuous thickening storage unit (14), and with the ripening process being determined by the pass-through time and the heat in the encapsulated continuous thickening storage unit (14) and by the rapidly reacting thickening agent which is admixed to the resin batch (9) prior to application to the bottom or upper belts (2; 3).

2. A method according to claim 1, **characterized in that** the temporal predetermination of the ripening process is made by the choosable length of the belt carriers (15) in the continuous thickening storage unit (14) and by the production speed.

3. An installation for performing the method according to claim 1 and 2 in a resin mat installation (1), consisting of mixing stations for the resin batch components for producing a resin batch (9), two doctor blades (4 and 7) spreading the resin batch (9) onto a bottom and upper belt (2 and 3), an apparatus for applying cut glass (6) onto the bottom resin batch layer (5), a milling and impregnating section (B) for forming an endless resin mat (10), a cutting mechanism (17) for dividing the endless resin mat (10) In correct form into mats (18) cut to size, and a moulding press in which the cut mats (18) are placed individually or as a packet and can be pressed into a moulded part (21), **characterized in that** a continuous thickening storage unit (14) for the ripening process is provided after the milling and impregnating section (B) for forming an endless resin mat (10), which storage unit comprises belt supports (15) for the endless resin mat (10) which are arranged in a meandering manner and can be tempered, and the cutting mechanism (17) for dividing the resin mat (10) is arranged at the exit of the resin mat (10) from the continuous thickening storage unit (14)

4. An installation according to claim 3, **characterized in that** the belts (2 and 3) are arranged in an endless manner and sufficiently strong for permanent operation.

5. An installation according to claims 3 and 4, **characterized in that** the length of the ripening section is composed of several superimposed partial sections (s, + S₂ + S₃ ... Sₙ) of the belt supports (15).

## Revendications

1. Procédé de fabrication de pièces mises en forme armées de fibres de verre en composite SMC, dans lequel le processus de fabrication est exécuté de façon continue dans une installation de fabrication de mats imprégnés de résine (1), du mélange des différents composants de l'additif à la résine (9) au pressage d'une pièce mise en forme, dans lequel l'additif à la résine (9) fabriqué par le mélange intensif des composants précisément dosés est étalé selon les spécifications par fractions sur une bande inférieure (2) et une bande supérieure (3) au moyen de racles (4 ; 7) pour former des couches d'additif à la résine (5 ; 8) d'épaisseur différente, dans lequel des fibres de verre coupées (6) et/ou des fibres longues sont dosées sur la couche supérieure d'additif à la résine (5) et, après réunion des deux couches d'additif à la résine (5 ; 8), sont formées dans une installation de fabrication de mats imprégnés de résine (1) construite comme une chaîne de foulage et d'imprégnation (B) pour donner un tapis de résine sans fin (10), qui est amené après la division en tapis recoupés (18) prédéterminés à la suite du traitement dans une presse de moulage (20) et pressés pour donner une pièce mise en forme (21), le tapis de résine sans fin (10) étant guidé en méandres avec les bandes (2 ; 3) à travers un épaississeur à circulation continue (14) tempéré en vue d'une maturation de durée prédéterminable, et le processus de maturation étant déterminé par le temps de passage et la chaleur dans l'épaississeur à circulation continue (14) encapsulé et par l'épaississant à réaction rapide qui est mélangé à l'additif à la résine (9) avant l'application sur les bandes inférieure ou supérieure (2 ; 3).

2. Procédé selon la revendication 1, **caractérisé en ce que** la consigne de temps du processus de maturation est définie par la longueur sélectionnable des supports de bande (15) dans l'épaississeur à circulation continue (14) et la vitesse de production.

3. Installation pour l'exécution du procédé selon les revendications 1 et 2 dans une installation de fabrication de mats imprégnés de résine (1) composée de postes de mélange des composants de l'additif à la résine pour la fabrication d'un additif à la résine (9), de deux racles (4 et 7) étalant l'additif à la résine (9) sur une bande inférieure et une autre supérieure (2 et 3), d'un dispositif pour l'application de fibres de verre coupées (6) sur la couche inférieure d'additif à la résine (5), d'une chaîne de foulage et d'imprégnation (B) destinée à former un tapis de résine sans fin (10), d'un poste de découpe (17) pour le partage adapté à la forme du tapis de résine sans fin (10) en tapis découpés (18), et d'une presse de formage dans laquelle les tapis découpés (18) déposés séparément ou en paquets peuvent être pressés pour donner une pièce mise en forme (21), **caractérisée en ce qu'**il est prévu après la chaîne de foulage et d'imprégnation (B) pour la formation d'un tapis de résine sans fin (10) un épaississeur à circulation continue (14) pour le processus de maturation, qui présente des supports de bande (15) disposés en méandre et pouvant être amenés à température pour le tapis de résine sans fin (10) et le poste de découpe (17) pour la division du tapis de résine (10) est disposé à la sortie du tapis de résine (10) hors de l'épaississeur à circulation continue (14)

4. Installation selon la revendication 3, **caractérisée en ce que** les bandes (2 et 3) sont sans fin et suffisamment solides pour un fonctionnement en continu.

5. Installation selon les revendications 3 et 4, **caractérisée en ce que** la longueur de la chaîne de maturation est composée de plusieurs parties de longueur (S₁ + S₂ + S₃... Sₙ) des supports de chaîne (15) disposées les unes au-dessus des autres.
